(19) Europäisches Patentamt

European Patent Office

Office européen des brevets

(11) Veröffentlichungsnummer: **0 260 523 B1**

# (12) EUROPÄISCHE PATENTSCHRIFT

(45) Veröffentlichungstag der Patentschrift: **19.06.91**

(51) Int. Cl.⁵: **H04M 1/03**

(21) Anmeldenummer: **87112751.0**

(22) Anmeldetag: **01.09.87**

(54) Halterung einer in einem zweiteiligen Gehäuse angeordneten Leiterplatte.

(30) Priorität: **04.09.86 DE 3630196**

(43) Veröffentlichungstag der Anmeldung:
**23.03.88 Patentblatt 88/12**

(45) Bekanntmachung des Hinweises auf die
Patenterteilung:
**19.06.91 Patentblatt 91/25**

(84) Benannte Vertragsstaaten:
**AT CH DE FR LI**

(56) Entgegenhaltungen:
**WO-A-85/03613**
**US-A- 4 291 202**

**TELCOM REPORT, Band 7, Heft 2, 1984, Seiten 141-146, Passau, DE; H. GRESKA et al.: "Siemens miniset 200 - ein Kompaktfernsprecher für überall"**

(73) Patentinhaber: **Siemens Aktiengesellschaft**
**Wittelsbacherplatz 2**
**W-8000 München 2(DE)**

(72) Erfinder: **Breu, Karl, Dipl.-Ing. (FH)**
**Grasslfinger Strasse 7**
**W-8038 Gröbenzell(DE)**
Erfinder: **Hoher, Herbert**
**Sudetenstrasse 11**
**W-8034 Germering(DE)**

## Beschreibung

Die Erfindung betrifft eine Halterung einer federnd elastischen, ebenen Leiterplatte in einem eine gebogene Form aufweisenden aus zwei Teilen bestehendem Gehäuse, insbesondere in einem Handapparatekörper für Fernsprechgeräte.

Leiterplatten weisen zumeist eine ebene Form auf, um die Herstellung und die Bestückung in Automaten einfacher vornehmen zu können.

Insbesondere in modernen Handapparaten der Fernsprechtechnik, die beispielsweise die Wähleinrichtung sowie weitere Funktionstasten aufweisen können, sind wegen der vorgegebenen Größe der Handapparatekörper dem Platzangebot natürliche Grenzen gesetzt. Der Handapparatekörper weist aus akustischen Gründen eine gebogene Form auf. Soll nun eine ebene Leiterplatte darin angeordnet werden, so muß entweder die Dicke des Handapparatekörpers vergrößert werden, was die Handhabung verschlechtert, oder die Leiterplatte muß zumindest in ihren Endbereichen auf den Wandlerseiten abgebogen werden.

Durch einen aus der Druckschrift "Telcom report 7 (1984) Heft 2, S.141-146" beschrieben Kompaktfernsprecher ist eine gebogene Leiterplatte bekannt, die eine derartig abgebogene Form aufweist. Im Normalzustand ist die Leiterplatte eben. Im eingebauten Zustand liegt die Leiterplatte jedoch unter Vorspannung an einem der Gehäuseteil des Handapparatekörpers an, so daß die Leiterplatte eine abgebogene der Form des Handapparatekörpers entsprechende Gestalt aufweist.

Es hat sich nun herausgestellt, daß diese Ausführungsform nicht immer ausreicht, um bei plötzlichen Bewegungen des Handapparates ein Abheben der Leiterplatte aus der Vorspannstelle zu verhindern. Die Folge davon ist eine Übertragung von Knackgeräuschen insbesondere auf das Mikrofon, was sich störend auf die Übertragungsqualität von Ferngesprächen auswirkt.

Es ist Aufgabe der Erfindung, die Endbereiche einer zwischen Gehäuseteilen angeordneten Leiterplatte so zu sichern, daß eine vorübergehende Lageänderung der Endbereiche der Leiterplatte ausgeschlossen ist.

Eine Befestigung mittels Schrauben oder dergleichen kann jedoch dann nicht in Frage kommen, wenn unter den Endbereichen sich Bauelemente wie elektroakustische Wandler befinden, da diese körperschallentkoppelt im Gehäuse z.B. mittels elastischen Ringen gelagert sind und eine Befestigung daran ausgeschlossen ist.

Die Aufgabe wird nun nach der Erfindung dadurch gelöst, daß zumindest an einem Endbereich der Leiterplatte zumindest ein aus einem der Gehäuseteilen herausragendes federndes Befestigungselement zumindest einen Endbereich der Leiterplatte übergreift und/oder an diesem verrastend anliegt, wobei das Befestigungselement im Befestigungsbereich eine derartige Länge aufweist, daß die Leiterplatte eine entsprechend der gebogenen Form des aufnehmenden Gehäuseteils angepaßte Form aufweist.

Die Leiterplatte erhält damit schon im nicht montierten Zustand der Gehäuseteile eine derartig abgebogene Form, daß sie im montierten Zustand nicht mehr am anderen Gehäuseteil anliegt.

Das Befestigungselement kann z.B. Teil des Gehäuseunterteils sein, auf dem auch die Leiterplatte angeordnet ist.

Es kann somit als federnder, am Gehäuseunterteil angespritzter Steg ausgebildet sein.

Um eine Erhöhung der Festigkeit zu erzielen, kann es zweckmäßig sein, daß die federnden Befestigungselemente als ein federnde Eigenschaften aufweisender Bügel ausgebildet sind.

Damit ist die Bewegung des Befestigungselementes zumindest um einen Freiheitsgrad erschwert.

Eine besonders vorteilhafte Ausbildung ergibt sich dadurch, daß der Bügel an seinem Mittelsteg einen angeformten Lappen aufweist, der in eine Ausnehmung der Leiterplatte eingreift und daß an dessen Endbereichen je eine Rastnase sowie ein der Dicke der Leiterplatte entsprechender davon beabstandeter Anschlag vorgesehen sind.

Die Leiterplatte kann zur Lagesicherung somit mit ihren Endbereichen niedergedrückt werden, wodurch sich die Endbereiche abbiegen, der Lappen greift in eine Ausnehmung der Leiterplatte ein und die Rastnase verhindert eine entgegengesetzte Bewegung der Endbereiche. Der Anschlag begrenzt die Vorspannung der Leiterplatte und legt die Krümmung der Endbereiche der Leiterplatte fest. Gelöst werden kann der Endbereich dadurch, daß man die Rastnasen nacheinander von der Einspannstelle wegdrückt, wodurch die Raststellen freigegeben werden und ein Endbereich aus dem Lappen sich nach oben löst.

In einigen Anwendungsfällen kann es zweckmäßig sein, wenn der Bügel schwenkbar im Gehäuse gehaltert ist.

Damit wird bei gelösten Endbereich der Leiterplatte der Zugang zu anderen Bauelementen, z.B. den Anschlußstellen der Wandler erleichtert.

Um Änderungen am Gehäuse zu vermeiden, ist es zweckmäßig, daß der Bügel in bogenförmigen Lageraugen eines Haltekörpers eines Wandlers angeordnet ist.

Die Lageraugen werden in eingespanntem Zustand der Leiterplatte auf Zug beansprucht, so daß eine sichere Befestigung des Bügels erzielt wird.

Um ein Loslösen des Bügels aus den Lageraugen zu ermöglichen, ist es zweckmäßig, daß die Lageraugen zum Boden des Gehäuses zugewandt einseitig offen sind.

Aufgrund dieser Anordnung kann der Bügel sich nicht selbständig lösen. Er kann nur gemeinsam mit der Wandlerhalterung aus dem Gehäuse entfernt werden.

Um die Vormontage der Wandlerhalterung gemeinsam mit dem Bügel zu erleichtern, ist es zweckmäßig, daß der Bügel im Bereich der Lageraugen einen Ansatz aufweist, der auf der Außenkontur des Lagerauges gleitet.

Der Bügel kann somit nur in einer einzigen von der Normalstellung um etwa 90° verschwenkten Stellung aus der Wandlerhalterung entfernt werden.

Im folgenden sei die Erfindung anhand von vier Figuren näher erläutert.

Es zeigen

Fig. 1 einen Querschnitt durch einen Handapparat, wobei nur die wesentlichen Teile dargestellt sind

Fig. 2 eine Draufsicht auf die Innenseite des Gehäuseunterteiles des Handapparates

Fig. 3 einen Bügel in Draufsicht

Fig. 4 den Bügel nach Fig. 3 in Ansicht

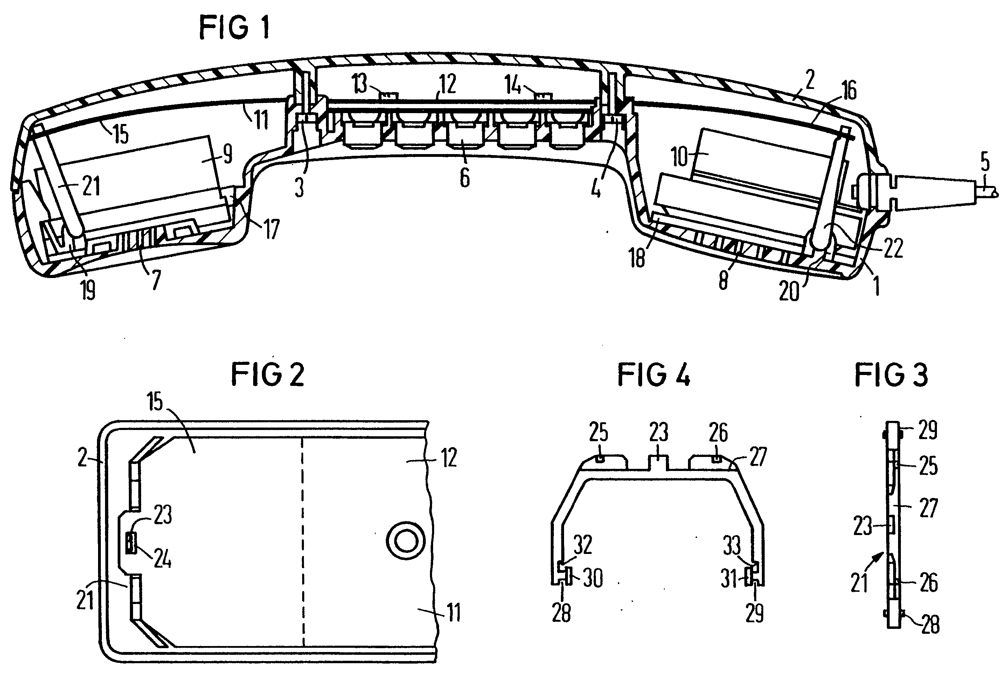

Der Handapparatekörper nach Fig. 1 besteht aus einem Gehäuseunterteil 1 sowie aus einem mit ihm verbundenen Gehäuseoberteil 2. Die beiden Teile sind mittels Schrauben 3, 4 miteinander verbunden. An einem Ende des Handapparatekörpers ist die Handapparateschnur 5 erkennbar. Im Mittelteil des Gehäuseunterteils 1 ist die Wähleinrichtung 6 angeordnet, die durch ein Tastenfeld gebildet ist. Im Gehäuseunterteil 1 sind weiterhin Schalldurchlaßöffnungen 7, 8 vorgesehen, hinter denen im Inneren des Gehäuseunterteils die elektroakustischen Wandler angeordnet sind. So befindet sich hinter den Schalldurchlaßöffnungen 7 die Hörkapsel 9 und hinter den Schalldurchlaßöffnungen 8 die Sprechkapsel 10. Im Inneren zwischen den Gehäuseteilen 1 und 2 ist weiterhin eine unbestückte Leiterplatte erkennbar, deren Mittelbereich 12 eben ausgebildet ist und mit Schrauben 13, 14 mit dem Gehäuseunterteil verschraubt ist. Die freien Endbereiche 15, 16 der Leiterplatte 11 befinden sich über der Hör- und Sprechkapsel 9, 10. In diesen Bereichen sind nun die Haltekörper 17, 18 erkennbar, durch die die Hör-und Sprechkapsel gehaltert sind. Diese Körper weisen jeweils zu beiden Seiten je ein einseitig offenes U-förmiges Lagerauge 19, 20 auf. Diese Lageraugen dienen zur Aufnahme eines Bügels 21, 22 der darin schwenkbar angeordnet ist.

An der der Lagerstelle abgewandten Seite steht jeder Bügel mit je einem Endbereich der Leiterplatte in Verbindung und zieht sie unter Vorspannung in die vorgesehene gebogene Lage.

In Fig. 2 ist nun ein Teil der Innenseite des Gehäuseunterteils dargestellt. Der Bügel 21 weist in seinem Mittelbereich einen Lappen 23 auf, der in einer Ausnehmung 24 der Leiterplatte 11 endet.

Wie die Figuren 3 und 4 weiterhin zeigen, weist der Bügel zwei Rastnasen 25, 26 sowie einen Anschlag 27 auf. Hinter diese Rastnasen verrastet der Endbereich 15 der Leiterplatte 11. In den Figuren 3 und 4 sind weiterhin die Lagerzapfen 28, 29 erkennbar. Die Ansätze 30, 31 verhindern ein selbständiges Lösen der Lagerzapfen aus den Lageraugen. Weitere Ansätze 32, 33 bewirken, daß der Bügel nur in seiner von der Gebrauchslage abweichenden Stellung aus den Lageraugen gelöst werden kann.

## Ansprüche

1. Halterung einer federnd elastischen, ebenen Leiterplatte in einem eine gebogene Form aufweisenden aus zwei Teilen bestehendem Gehäuse, insbesondere in einem Handapparatekörper für Fernsprechgeräte, **dadurch gekennzeichnet,** daß zumindest an einem Endbereich (15, 16) der Leiterplatte (11) zumindest ein aus einem der Gehäuseteile (1, 2) herausragendes federndes Befestigungselement zumindest einen Endbereich (15, 16) der Leiterplatte übergreift und/oder an diesem verrastend anliegt, wobei das Befestigungselement im Befestigungsbereich eine derartige Länge aufweist, daß die Leiterplatte (11) eine entsprechend der gebogenen Form des aufnehmenden Gehäuseteils (1, 2) angepaßte Form aufweist.

2. Halterung nach Anspruch 1, **dadurch gekennzeichnet,** daß die federnden Befestigungselemente als ein federnde Eigenschaften aufweisender Bügel (21, 22) ausgebildet sind.

3. Halterung nach Anspruch 2, **dadurch gekennzeichnet,** daß der Bügel (21, 22) an seinem Mittelsteg einen angeformten Lappen (23) aufweist, der in einer Ausnehmung (24) der Leiterplatte eingreift und daß an dessen Endbereichen je eine Rastnase (25, 26) sowie ein der Dicke der Leiterplatte entsprechender davon beabstandeter Anschlag (27) vorgesehen sind.

4. Halterung nach Anspruch 2, **dadurch gekennzeichnet,** daß der Bügel (21, 22) schwenkbar im Gehäuse gehaltert ist.

5. Halterung nach den Ansprüchen 2 und 4, **dadurch gekennzeichnet,** daß der Bügel (21, 22) in bogenförmigen Lageraugen (19, 20) eines Haltekörpers (17, 18) eines Wandlers angeordnet ist.

6. Haltekörper nach Anspruch 5, **dadurch gekennzeichnet,** daß die Lageraugen (19, 20) zum Boden des Gehäuses zugewandt einseitig offen sind.

7. Haltekörper nach Anspruch 6, **dadurch gekennzeichnet,** daß der Bügel (21, 22) im Bereich der Lageraugen einen Ansatz (32, 33) aufweist, der auf der Außenkontur des Lagerauges gleitet.

## Claims

1. Holder for a resiliently elastic, planar printed circuit board in a housing having a curved shape and consisting of two parts, in particular in a handset body for telephone devices, characterised in that at least one resilient mounting element projecting out of one of the housing parts (1, 2) engages over at least one end region (15, 16) of the printed circuit board and/or rests against it in interlocking fashion, the mounting element having in the mounting region a length such that the printed circuit board (11) has a shape which is correspondingly matched to the curved shape of the housing part (1, 2) receiving it.

2. Holder according to Claim 1, characterised in that the resilient mounting elements are constructed as a clip (21, 22) having resilient properties.

3. Holder according to Claim 2, characterised in that the clip (21, 22) has a tab (23) formed onto its centre web, which tab engages in a recess (24) of the printed circuit board, and in that at the end regions of said clip in each case one locking nose (25, 26) and a stop (27) corresponding to the thickness of the printed circuit board and distanced therefrom are provided.

4. Holder according to Claim 2, characterised in that the clip (21, 22) is swivellably mounted in the housing.

5. Holder according to Claims 2 and 4, characterised in that the clip (21, 22) is arranged in arcuate bearing eyelets (19, 20) of a retaining body (17, 18) of a transducer.

6. Retaining body according to Claim 5, characterised in that the bearing eyelets (19, 20) are open on one side facing the floor of the housing.

7. Retaining body according to Claim 6, characterised in that the clip (21, 22) has in the region of the bearing eyelets a shoulder (32, 33) which slides on the outside contour of the bearing eyelet.

## Revendications

1. Dispositif de fixation d'une plaquette élastique plane à circuits imprimés dans un boîtier possédant une forme cintrée et constitué de deux parties, notamment dans le corps de combinés d'appareils téléphoniques, caractérisé par le fait qu'au moins dans une zone d'extrémité (15,16) de la plaquette à circuits imprimés (11), au moins un élément élastique de fixation, qui fait saillie hors de l'une des parties (1,2) du boîtier, s'engage par-dessus au moins une zone d'extrémité (15,16) de la plaquette à circuits imprimés et/ou s'applique dans cette zone en y étant encliqueté, l'élément de fixation possédant, dans la zone de fixation, une longueur telle que la plaquette à circuits imprimés (11) possède une forme adaptée à la forme courbe de la partie réceptrice (1,2) du boîtier.

2. Dispositif de fixation suivant la revendication 1, caractérisé par le fait que les éléments élastiques de fixation sont réalisés sous la forme d'un étrier (21,22) possédant des propriétés élastiques.

3. Dispositif de fixation suivant la revendication 2, caractérisé par le fait que l'étrier (21,22) possède, sur sa barrette médiane, une languette moulée (23), qui s'engage dans un évidement (24) de la plaquette à circuits imprimés, et que dans les zones d'extrémité de la languette sont prévus respectivement un bec d'encliquetage (25,26) ainsi qu'une butée (27), qui correspond à l'épaisseur de la plaquette à circuits imprimés et est écartée de la plaquette.

4. Dispositif de fixation suivant la revendication 2, caractérisé par le fait que l'étrier (21,22) est monté de manière à pouvoir pivoter dans le boîtier.

5. Dispositif de fixation suivant les revendications 2 et 4, caractérisé par le fait que l'étrier (21,22) est disposé dans des oeillets de montage (19,20) en forme d'arcs de cercle d'un corps de fixation (17,18) d'un transducteur.

6. Dispositif de fixation suivant la revendication 5, caractérisé par le fait que les oeillets de montage (19,20) sont ouverts unilatéralement en direction du fond du boîtier.

7. Dispositif de fixation suivant la revendication 6, caractérisé par le fait que l'étrier (21,22) possède, dans la zone des oeillets de montage, un appendice saillant (32, 33), qui glisse sur le contour extérieur de l'oeillet de montage.

FIG 1

FIG 2

FIG 3

FIG 4